# EUROPEAN PATENT APPLICATION

(11) **EP 3 040 877 A1**
(43) Date of publication of application: **06.07.2016**
(21) Application number: 13882558.3
(22) Date of filing: 18.09.2013
(51) Int. Cl.: G06F 17/30

(54) **METHOD AND SYSTEM FOR PROCESSING ASSOCIATED CONTENT**

(30) Priority: 29.08.2013 CN 201310385183
(71) Applicant: ZTE Corporation, Guangdong Province 518057 (CN)
(72) Inventor: YAO, Lizhe, Shenzhen Guangdong Province 518057 (CN); CHEN, Jun, Shenzhen Guangdong Province 518057 (CN); SHANG, Guoqiang, Shenzhen Guangdong Province 518057 (CN)
(74) Representative: Novagraaf Technologies
(86) International application number: PCT/CN2013/083815
(87) International publication number: WO 2014/169571

(57) **Abstract**

Provided are a method and system for processing associated content, the method includes: when multimedia is played, buffering some or all of data in the multimedia; receiving a request, wherein the request is configured to request to acquire content associated with the buffered data; acquiring a keyword according to the buffered data; according to the keyword, obtaining the associated content retrieved, and sending the associated content. Through the disclosure, the problem that associated content in which a user is interested fails to be generated in the related art is solved, and it is realized to generate the associated content according to a request of the user, and user experience is improved.

## Description

### Technical Field

The disclosure relates to the field of communications, and in particular to a method and system for processing associated content.

### Background

The inventor finds out that when people watch a multimedia file, such as a television or a video, and if they are interested in certain content therein, users are required to search for relevant information and content by themselves. With the development of technologies, at present, some relevant content has been associated in advance in some videos for users to select when watching. However, the associated content is preset, and the associated content in which the users are interested still fails to be dynamically generated according to users' requirements.

With regard to the problem that associated content in which a user is interested fails to be generated in the related art, no solution has been provided at present.

### Summary

The embodiments of the disclosure provide a method and system for processing associated content, so as to at least solve the problem that the associated content in which a user is interested fails to be generated in the related art.

According to one example of the embodiments of the disclosure, a method for processing an associated content is provided, including: when multimedia is played, buffering some or all of data in the multimedia; receiving a request, wherein the request is configured to request to acquire content associated with the buffered data; acquiring a keyword according to the buffered data; and obtaining the associated content by performing retrieval according to the keyword.

In an example embodiment, the buffering the some or all of the data in the multimedia includes: configuring at least two buffer areas on an apparatus that buffers the some or all of the data, wherein each buffer area of the at least two buffer areas is configured to buffer predetermined duration of data; and storing the some or all of the data on the at least two buffer areas.

In an example embodiment, the storing the some or all of the data on the at least two buffer areas includes: after the first buffer area of the at least two buffer areas is filled with data, buffering data in the second buffer area, and continuing buffering data until the nth buffer area is filled with data, and after data is filled in the nth buffer area, deleting data in the first buffer area, and re-buffering data in the first buffer area, wherein n is the number of buffer areas.

In an example embodiment, the buffering the some or all of the data in the multimedia includes: buffering the some or all of the data on a device playing the multimedia; and/or, buffering the some or all of the data at a server side.

In an example embodiment, the acquiring the keyword according to the buffered data includes: parsing the keyword from the buffered data; or, parsing one or more keywords from the buffered data, sending the one or more keywords to a sender of the request, and using one or more keywords confirmed by the sender as the keyword.

In an example embodiment, the parsing the keyword from the buffered data includes: in the case where the buffered data include audio data, recognizing some or all of content in the audio data as the keyword; and/or, in the case where the buffered data include video data, acquiring the keyword corresponding to an image of the video data.

In an example embodiment, the device playing the multimedia and a device sending the request are different devices, and the device playing the multimedia is connected with the device sending the request.

According to another embodiment of the embodiments of the disclosure, a system for processing an associated content is further provided, including: a buffer component, configured to buffer, when multimedia is played, some or all of data in the multimedia; a receiving component, configured to receive a request, wherein the request is configured to request to acquire content associated with the buffered data; an acquisition component, configured to acquire a keyword according to the buffered data; and a retrieval component, configured to obtain the associated content by performing retrieval according to the keyword.

In an example embodiment, the buffer component is configured to store the some or all of the data on at least two buffer areas, wherein the at least two buffer areas are configured on an apparatus that buffers the some or all of the data, and each buffer area of the at least two buffer areas is configured to buffer predetermined duration of data.

In an example embodiment, the buffer component is configured to buffer, after the first buffer area of the at least two buffer areas is filled with data, data in the second buffer area, and continue buffering data until the nth buffer area is filled with data, and after data is filled in the nth buffer area, delete data in the first buffer area, and re-buffer data in the first buffer area, wherein n is the number of buffer areas.

In an example embodiment, the buffer component is located in a device playing the multimedia; and/or, is located in a server providing the multimedia.

In an example embodiment, the acquisition component is configured to parse the keyword from the buffered data; or, the acquisition component is configured to parse one or more keywords from the buffered data, send the one or more keywords to a sender of the request, and use one or more keywords confirmed by the sender as the keyword.

In an example embodiment, the acquisition component is configured to recognize, in the case where the buffered data include audio data, some or all of content in the audio data as the keyword; and/or, the acquisition component is configured to acquire, in the case where the buffered data include video data, the keyword corresponding to an image of the video data.

In an example embodiment, the device playing the multimedia and a device sending the request are different devices, and the device playing the multimedia is connected with the device sending the request.

Through the embodiments of the disclosure, when multimedia is played, some or all data in the multimedia are buffered; a request is received, wherein the request is configured to request to acquire content associated with the buffered data; a keyword is acquired according to the buffered data; and the associated content is obtained by performing retrieval according to the keyword, and the associated content is sent. The problem that associated content in which a user is interested fails to be generated in the related art is solved, and it is realized to generate the associated content according to a request of the user, and user experience is improved.

### Brief Description of the Drawings

Drawings, provided herein for further understanding of the disclosure and forming a part of the description, are used to explain the disclosure together with the exemplary embodiments of the disclosure rather than to limit the disclosure, wherein:
Fig. 1 is a flowchart of a method for processing associated content according to the embodiments of the disclosure;
Fig. 2 is a structure diagram of a system for processing associated content according to the embodiments of the disclosure;
Fig. 3 is the first example structure diagram of a system for processing associated content according to the embodiments of the disclosure;
Fig. 4 is the second example structure diagram of a system for processing associated content according to the embodiments of the disclosure;
Fig. 5 is the third example structure diagram of a system for processing associated content according to the embodiments of the disclosure; and
Fig. 6 is the fourth example structure diagram of a system for processing associated content according to the embodiments of the disclosure.

### Detailed Description of the Embodiments

It should be noted that the embodiments of the disclosure and the features of the embodiments can be combined with each other if there is no conflict. The disclosure will be explained below with reference to the drawings and in conjunction with the embodiments in detail.

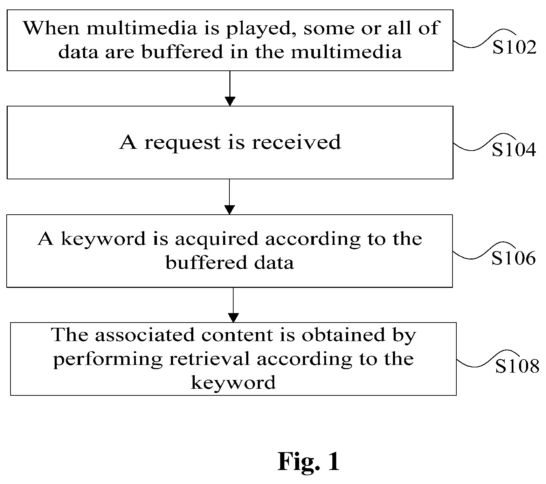

In an example embodiment, a method for processing associated content is provided. Fig. 1 is a flowchart of a method for processing associated content according to the embodiments of the disclosure, and as shown in Fig. 1, the flow includes the following steps:
step S102, when multimedia is played, some or all of data are buffered in the multimedia;
step S104, a request is received, wherein the request is configured to request to acquire content associated with the buffered data;
step S106, a keyword is acquired according to the buffered data; and
step S108, the associated content is obtained by performing retrieval according to the keyword.

By means of the above-mentioned steps, the associated content is obtained according to the keyword acquired from the buffer after the request is received, and this processing of acquiring the associated content is related to the buffered data, but not the content associated with the multimedia is configured in advance. Therefore, through the above-mentioned steps, the problem that associated content in which a user is interested fails to be generated in the related art is solved, it is realized to generate the associated content according to a request of the user, and user experience is improved.

In an example embodiment, at least two buffer areas are configured on an apparatus that buffers the some or all of the data, wherein each buffer area of the at least two buffer areas is configured to buffer predetermined duration of data; and the some or all of the data are stored on the at least two buffer areas. For example, a buffer area may be configured on a device playing multimedia or may be configured on a server. At least two buffer areas are configured for buffering more data; and since the buffer area buffers the predetermined duration of data, the buffered data may be correctly spliced according to content in the buffer area in a time order.

There are multiple manners to buffer data on at least two buffer areas, for example, as an alternative manner, data may be buffered in the second buffer area after the first buffer area of the at least two buffer areas is filled with data, and data continue to be buffered until the nth buffer area is filled with data, and after the data is filled in the nth buffer area, the data in the first buffer area is deleted, and data is re-buffered in the first buffer area, wherein n is the number of buffer areas.

The keywords acquired according to the buffered data may be one or more, and at this time, the acquired keyword may be directly used as the keyword or sent to a requester for confirmation, i.e., the acquiring the keyword according to the buffered data includes: parsing the keyword from the buffered data; or, parsing one or more keywords from the buffered data, sending the one or more keywords to a sender of the request, and using one or more keywords confirmed by the sender as the keyword. The keyword that has been confirmed by the requester is more accurate, but operation steps are added. Therefore, the two manners may be used in combination, for example, confirmation is no longer needed in the case where one keyword is only acquired, and multiple keywords are sent to the requester for confirmation if the multiple keywords are acquired.

The type of the buffered data may be audio data, and the audio data may use an audio recognition technology; and the buffered data may also be video data, and an image recognition technology may be adopted for the video data, wherein the keyword is obtained by comparing an image with a preset image library. For example, in the case where the buffered data include audio data, some or all of content in the audio data are recognized as the keyword; and/or, in the case where the buffered data include video data, the keyword corresponding to an image of the video data is acquired. There are many kinds of recognition methods for an audio recognition technology and a video recognition technology in the related art, and all these methods, which are not listed seriatim herein, may be used as long as a keyword can be recognized.

In an example embodiment, the device playing the multimedia and a device sending the request are different devices, and the device playing the multimedia is connected with the device sending the request.

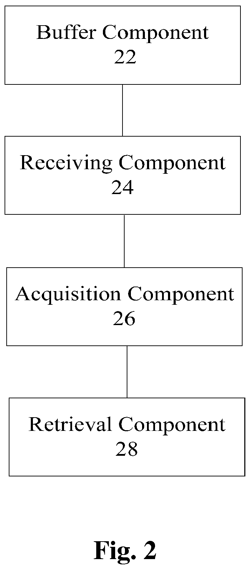

In the present embodiment, a system for processing associated content is further provided, wherein the system is used for realizing the above-mentioned method. What have been described in the above-mentioned embodiment and the example embodiments will not be described again herein. It should be noted that names of the components in the following system do not constitute the actual definitions of the components, for example, a buffer component may be expressed as "a component used for storing some or all of the data on at least two buffer areas". The following components may all be realized in a processor, for example, the buffer component may be expressed as "a processor for storing some or all of the data on at least two buffer areas", or "a processor, including a buffer component". Fig. 2 is a structure diagram of a system for processing associated content according to the embodiments of the disclosure, as shown in Fig. 2, the structure includes: a buffer component 22, a receiving component 24, an acquisition component 26 and a retrieval component 28. These components may be realized on one server or a server group, and may also be realized as different servers. For example, the receiving component 24 and the buffer component 22 may be realized on a video server, and definitely, the buffer component 22 may also be realized on a terminal playing a video; the acquisition component 26 may be realized on a recognition server such as a voice recognition server; and the retrieval component may be realized on an associated content generation server. The system will be explained below in detail.

The buffer component 22 is configured to buffer, when multimedia is played, some or all of data in the multimedia; the receiving component 24 is configured to receive a request, wherein the request is configured to request to acquire content associated with the buffered data; the acquisition component 26 is configured to acquire a keyword according to the buffered data; and the retrieval component 28 is configured to obtain the associated content by performing retrieval according to the keyword.

In an example embodiment, the buffer component 22 is configured to store the some or all of the data on at least two buffer areas, wherein the at least two buffer areas are configured on an apparatus that buffers the some or all of the data, and each buffer area of the at least two buffer areas is configured to buffer a predetermined duration of data.

In an example embodiment, the buffer component 22 is configured to buffer, after the first buffer area of the at least two buffer areas is filled with data, data in the second buffer area, and continue buffering data until the nth buffer area is filled with data, and after the data is filled in the nth buffer area, delete data in the first buffer area, and re-buffer data in the first buffer area, wherein n is the number of buffer areas.

In an example embodiment, the buffer component 22 is located in a device playing the multimedia; and/or, is located in a server providing the multimedia.

In an example embodiment, the acquisition component 26 is configured to parse the keyword from the buffered data; or, the acquisition component 26 is configured to parse one or more keywords from the buffered data, send the one or more keywords to a sender of the request, and use one or more keywords confirmed by the sender as the keyword.

In an example embodiment, the acquisition component 26 is configured to recognize, in the case where the buffered data include audio data, some or all of content in the audio data as the keyword; and/or, the acquisition component 26 is configured to acquire, in the case where the buffered data include video data, the keyword corresponding to an image of the video data.

In an example embodiment, the device playing the multimedia and a device sending the request are different devices, and the device playing the multimedia is connected with the device sending the request.

The explanation will be made below in conjunction with example embodiments.

In the following example embodiments, the problem of how to dynamically generate associated content according to a certain content that a user hears and interests when the user watches a video is solved. In addition, the following embodiments further solve the problem of how to present the above-mentioned dynamically generated associated content without influencing the experience for a user to currently watch a video. Four example implementation solutions are provided in the following embodiments, which will be explained respectively below.

### Solution one

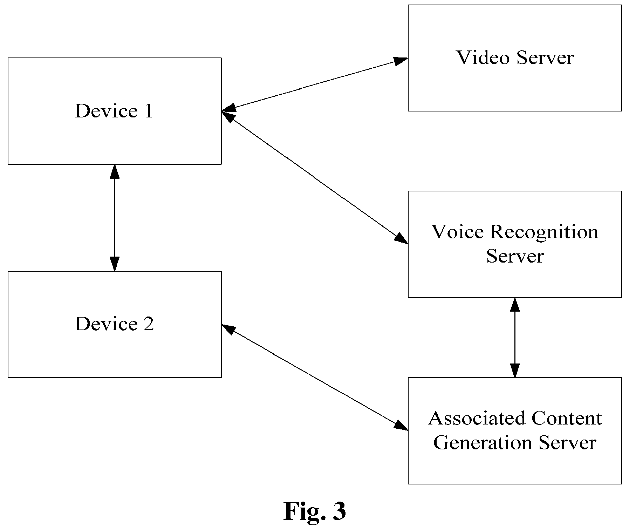

Fig. 3 is the first example structure diagram of a system for processing associated content according to the embodiments of the disclosure. As shown in Fig. 3, a user has a device 1 and a device 2, which are interacted via a short-distance communication technology, such as Bluetooth, wherein the device 1 is used for watching a video, and the device 2 is used for acquiring and presenting associated content.

In order to acquire audio information of the video being watched, the device 1 is configured with two buffer areas, which are configured to store audio in a recent period of time, details are as follows:
a buffer area b1, which can store audio with the duration being t1, and a buffer area b2, which can store audio with the duration being t2. When the user watches the video, b1 starts to buffer the audio information of the video from an initial position of the watching for the user; after b1 is filled with the audio information of the video, b2 starts to continue buffering the audio information of the video; and after b2 is filled with the audio information of the video, b1 starts to continue buffering the audio information of the video, and the information originally buffered in b1 is deleted, and above processes are repeated until the video is paused, stopped, forwarded or reversed. In this way, the audio information of the video in the recent period of time is buffered in b1 and b2 all the time.

The method for generating the associated content according to the audio information is as follows:
when the user hears content in which the user is interested, a request is sent to the device 1 for acquiring the associated content via the device 2;
after receiving the request, the device 1 combines the audio information buffered in the current b1 and b2 into one piece of audio in a time order;
the audio is sent to a voice recognition server to request the voice recognition server for recognition;
after receiving the request, the voice recognition server recognizes the audio;
a recognized keyword is sent to an associated content generation server;
after receiving the recognized keyword, the associated content generation server performs retrieval according to the keyword to generate the corresponding associated content;
the generated associated content is returned to the device 2; and
after receiving the associated content, the device 2 presents the associated content to the user.

In step 1 mentioned above, the device 2 and the device 1 are linked and interacted via the short-distance communication technology, such as the Bluetooth, Wireless Fidelity (WIFI). In step 2 mentioned above, since the two buffer areas b1 and b2 are alternately circulated for storing the audio information, and the data in the buffer area that currently buffers the audio may be used as a back end and the data in another buffer area that is filled may be used as a front end.

### Solution two

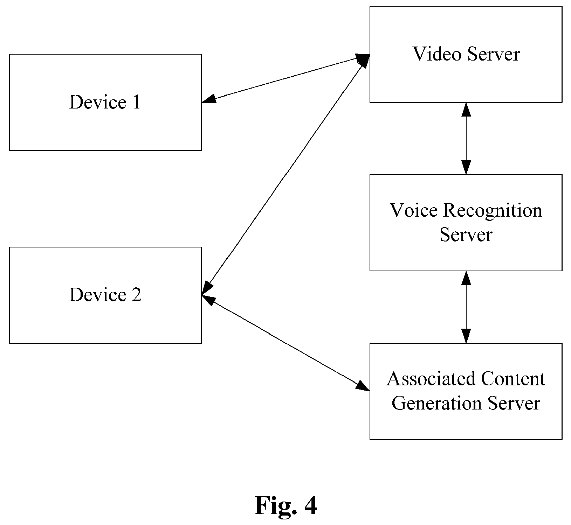

Fig. 4 is the second example structure diagram of a system for processing associated content according to the embodiments of the disclosure. As shown in Fig. 4, a user has a device 1 and a device 2, wherein the device 1 is used for watching a video, and the device 2 is used for acquiring and presenting associated content.

In order to acquire audio information of the video being watched, a video server is configured with two buffer areas, which are configured to store audio in a recent period of time, details are as follows:
a buffer area b1, which can store audio with the duration being t1, and a buffer area b2, which can store audio with the duration being t2. When the user watches the video, b1 starts to buffer the audio information of the video from an initial position of the watching for the user; after b1 is filled with the audio information of the video, b2 starts to continue buffering the audio information of the video; and after b2 is filled with the audio information of the video, b1 starts to continue buffering the audio information of the video, and the information originally buffered in b1 is deleted, and above processes are repeated until the video is paused, stopped, forwarded or reversed. In this way, the audio information of the video in the recent period of time is buffered in b1 and b2 all the time.

The method for generating the associated content according to the audio information is as follows:
when the user hears content in which the user is interested, a request is sent to the video server for acquiring the associated content via the device 2;
after receiving the request, the video server combines the audio information buffered in the current b1 and b2 into one piece of audio in a time order;
the audio is sent to a voice recognition server to request the voice recognition server for recognition;
after receiving the request, the voice recognizes server recognizing the audio;
a recognized keyword is sent to an associated content generation server;
after receiving the recognized keyword, the associated content generation server performs retrieval according to the keyword to generate the corresponding associated content;
the generated associated content is returned to the device 2; and
after receiving the associated content, the device 2 presents the associated content to the user.

In step 1 mentioned above, the device 2 and the device 1 are linked and interacted via the short-distance communication technology, such as the Bluetooth, WIFI. In step 2 mentioned above, since the two buffer areas b1 and b2 are alternately circulated for storing the audio information, above-mentioned method of judging in the time order may be realized through the method of using the data in the buffer area that currently buffers the audio as a back end and using the data in another buffer area that is filled as a front end.

### Solution three

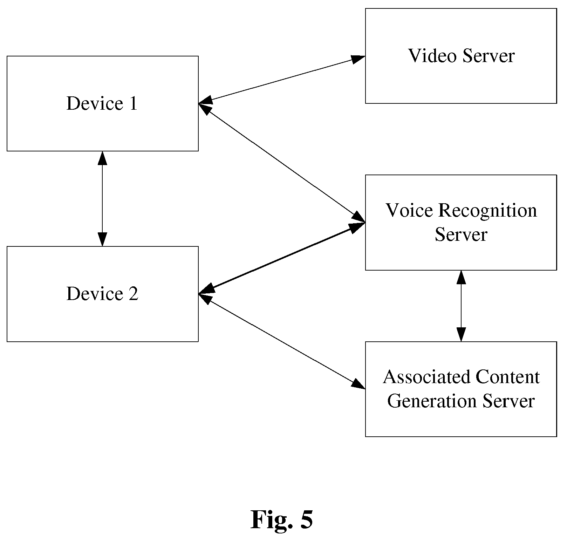

Fig. 5 is the third example structure diagram of a system for processing an associated content according to the embodiments of the disclosure. As shown in Fig. 5, a user has a device 1 and a device 2, which are interacted via a short-distance communication technology, such as Bluetooth, wherein the device 1 is used for watching a video, and the device 2 is used for acquiring and presenting associated content.

In order to acquire audio information of the video being watched, the device 1 is configured with two buffer areas, which are configured to store audio in a recent period of time, details are as follows:
a buffer area b1, which can store audio with the duration being t1, and a buffer area b2, which can store audio with the duration being t2. When the user watches the video, b1 starts to buffer the audio information of the video from an initial position of the watching for the user; after b1 is filled with the audio information of the video, b2 starts to continue buffering the audio information of the video; and after b2 is filled with the audio information of the video, b1 starts to continue buffering the audio information of the video, and the information originally buffered in b1 is deleted, and above processes are repeated until the video is paused, stopped, forwarded or reversed. In this way, the audio information of the video in the recent period of time is buffered in b1 and b2 all the time.

The method for generating the associated content according to the audio information is as follows:
when the user hears content in which the user is interested, a request is sent to the device 1 for acquiring the associated content via the device 2;
after receiving the request, the device 1 combines the audio information buffered in the current b1 and b2 into one piece of audio in a time order;
the audio is sent to a voice recognition server to request the voice recognition server for recognition;
after receiving the request, the voice recognition server recognizes the audio;
when there is more than one recognized keyword, the voice recognition server sends all the recognized keywords to the device 2;
the device 2 presents the multiple keywords received from the voice recognition server to the user, and the user selects the keyword in which the user is interested;
the device 2 sending the keyword (there may be more) selected by the user to an associated content generation server;
after receiving the recognized keyword, the associated content generation server performs retrieval according to the keyword to generate the corresponding associated content;
the generated associated content is returned to the device 2; and
after receiving the associated content, the device 2 presents the associated content to the user.

In step 1 mentioned above, the device 2 and the device 1 are linked and interacted via the short-distance communication technology, such as the Bluetooth, WIFI. In step 2 mentioned above, since the two buffer areas b1 and b2 are alternately circulated for storing the audio information, above-mentioned method of judging in the time order may be realized through the method of using the data in the buffer area that is currently buffers the audio as a back end and using the data in another buffer area that is filled as a front end.

### Solution four

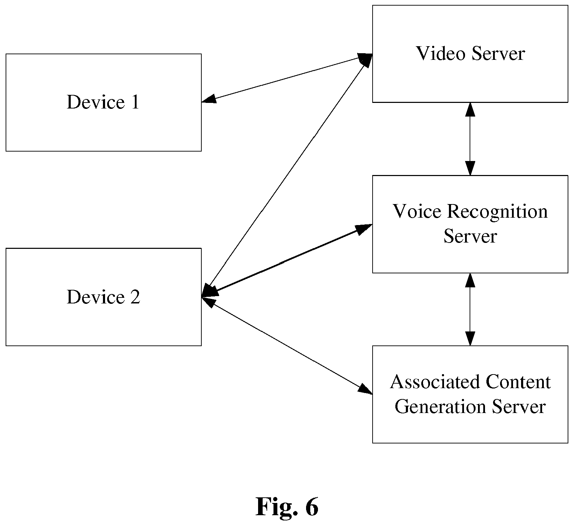

Fig. 6 is the fourth example structure diagram of a system for processing associated content according to the embodiments of the disclosure. As shown in Fig. 6, a user has a device 1 and a device 2, wherein the device 1 is used for watching a video, and the device 2 is used for acquiring and presenting an associated content.

In order to acquire audio information of the video being watched, a video server is configured with two buffer areas, which are configured to store audio in a recent period of time, details are as follows:
a buffer area b1, which can store audio with the duration being t1, and a buffer area b2, which can store audio with the duration being t2. When the user watches the video, b1 starts to buffer the audio information of the video from an initial position of the watching for the user; after b1 is filled with the audio information of the video, b2 starts to continue buffering the audio information of the video; and after b2 is filled with the audio information of the video, b1 starts to continue buffering the audio information of the video, and the information originally buffered in b1 is deleted, and above processes are repeated until the video is paused, stopped, forwarded or reversed. In this way, the audio information of the video in the recent period of time is buffered in b1 and b2 all the time.

The method for generating the associated content according to the audio information is as follows:
when the user hears content in which the user is interested, a request is sent to the video server for acquiring the associated content via the device 2;
after receiving the request, the video server combines the audio information buffered in the current b1 and b2 into one piece of audio in a time order;
the audio is sent to a voice recognition server to request the voice recognition server for recognition;
after receiving the request, the voice recognizes server recognizing the audio;
when there is more than one recognized keyword, the voice recognition server sends all the recognized keywords to the device 2;
the device 2 presents the multiple keywords received from the voice recognition server to the user, and the user selects the keyword in which the user is interested;
the device 2 sending the keyword (there may be more) selected by the user to an associated content generation server;
after receiving the recognized keyword, the associated content generation server performs retrieval according to the keyword to generate the corresponding associated content;
the generated associated content is returned to the device 2; and
after receiving the associated content, the device 2 presents the associated content to the user.

In step 1 mentioned above, the device 2 and the device 1 are linked and interacted via the short-distance communication technology, such as the Bluetooth, WIFI. In step 2 mentioned above, since the two buffer areas b1 and b2 are alternately circulated for storing the audio information, above-mentioned method of judging in the time order may be realized through the method of using the data in the buffer area that is currently buffers the audio as a back end and using the data in another buffer area that is filled as a front end.

In each of the above-mentioned solutions, the size of the buffer areas b1 and b2 may be configured according to the following methods:
a fixed storage space is configured, for example, b1=b2=512KB; or
the size of a storage space may be variable, however, the duration of the stored audio is a fixed value, for example, the duration of the stored audio is ten seconds, and according to a current audio coding situation, b1 and b2 dynamically adjust the size of the storage space.

The explanation will be made below in conjunction with two alternative scenarios.

### Scenario one

In conjunction with Fig. 3, a user has a device 1 and a device 2, wherein the device 1 is a television and the device 2 is a cellphone, which are interacted via a short-distance communication technology such as Bluetooth, wherein the television is used for watching a video, and the cellphone is used for acquiring and presenting associated content.

In order to acquire audio information of the video being watched, the television is configured with two buffer areas, which are configured to store audio in a recent period of time, details are as follows:
a buffer area b1, which can store audio with the duration being five seconds, and a buffer area b2, which can store audio with the duration being five seconds. When the user watches the video, b1 starts to buffer the audio information of the video from an initial position of the watching for the user; after b1 is filled with the audio information of the video, b2 starts to continue buffering the audio information of the video; and after b2 is filled with the audio information of the video, b1 starts to continue buffering the audio information of the video, and the information originally buffered in b1 is deleted and above processes are repeated until the video is paused, stopped, forwarded or reversed. In this way, the audio information of the video in the recent period of time is buffered in b1 and b2 all the time.

The user watches news via the television; when hearing "Shenzhou 10", the user expects to acquire more relevant content; and the user sends a request for acquiring associated content to the television by shaking the cellphone, and the processing flow thereafter is as follows:
after receiving the request, the television combines the audio information buffered in the current b1 and b2 into one piece of audio (in the present embodiment, the duration of the combined audio is seven seconds, wherein voice information about the "Shenzhou 10" is contained therein) in a time order;
the audio is sent to a voice recognition server to request the voice recognition server for recognition;
after receiving the request, the voice recognition server recognizes the audio, and then recognizes a keyword "Shenzhou 10";
the recognized keyword is sent to an associated content generation server;
after receiving the recognized keyword, the associated content generation server performs retrieval according to the keyword to generate the corresponding content associated with the "Shenzhou 10";
the generated associated content is returned to the cellphone; and
after receiving the associated content, the cellphone presents the associated content to the user, and the user may further understand the content related to the "Shenzhou 10" via the cellphone.

### Scenario two

In conjunction with Fig. 4, a user has a device 1 and a device 2, wherein the device 1 is a television and the device 2 is a cellphone, wherein the television is used for watching a video, and the cellphone is used for acquiring and presenting associated content.

In order to acquire audio information of the video being watched, a video server is configured with two buffer areas, which are configured to store audio in a recent period of time, details are as follows:
a buffer area b1, which can store audio with the duration being five seconds, and a buffer area b2, which can store audio with the duration being five seconds. When the user watches the video, b1 starts to buffer the audio information of the video from an initial position of the watching for the user; after b1 is filled with the audio information of the video, b2 starts to continue buffering the audio information of the video; and after b2 is filled with the audio information of the video, b1 starts to continue buffering the audio information of the video, and the information originally buffered in b1 is deleted and above processes are repeated until the video is paused, stopped, forwarded pr reversed. In this way, the audio information of the video in the recent period of time is buffered in b1 and b2 all the time.

The user watches news via the television; when hearing "Shenzhou 10", the user expects to acquire more relevant content; and the user sends a request for acquiring associated content to the video server by shaking the cellphone, and the processing flow thereafter is as follows:
after receiving the request, the video server combines the audio information buffered in the current b1 and b2 into one piece of audio (in the present embodiment, the duration of the combined audio is seven seconds, wherein voice information about the "Shenzhou 10" is contained therein) in a time order;
the audio is sent to a voice recognition server to request the voice recognition server for recognition;
after receiving the request, the voice recognition server recognizes the audio, and then recognizes a keyword "Shenzhou 10";
the recognized keyword is sent to an associated content generation server;
after receiving the recognized keyword, the associated content generation server performs retrieval according to the keyword to generate the corresponding content associated with the "Shenzhou 10";
the generated associated content is returned to the cellphone; and
after receiving the associated content, the cellphone presents the associated content to the user, and the user may further understand the content related to the "Shenzhou 10" via the cellphone.

In the above-mentioned two alternative scenarios, the keyword may also be confirmed by the cellphone, and then is retrieved.

Obviously, those skilled in the art shall understand that the above-mentioned components or steps in the embodiments of the disclosure can be realized by using a universal computing apparatus, can be integrated in one computing apparatus or distributed on a network which consists of a plurality of computing apparatuses, and alternatively, the components or the steps of the disclosure can be realized by using program codes executable by a computing apparatus, so that they can be stored in a storage apparatus and executed by the computing apparatus, or they are manufactured as various integrated circuit components respectively, or a plurality of components or steps thereof are manufactured as one integrated circuit component to be implemented. Thus, the embodiments of the disclosure are not limited to any particular combination of hardware and software.

The descriptions above are only the example embodiment of the disclosure, which are not used to restrict the disclosure. For those skilled in the art, the disclosure may have various changes and variations. Any amendments, equivalent substitutions, improvements, etc. within the principle of the disclosure are all included in the scope of the protection of the disclosure.

### Industrial Applicability

The technical solutions of the embodiments of the disclosure may be applied to the field of multimedia applications, solve the problem that associated content in which a user is interested fails to be generated in the related art, realize that the associated content is generated according to a request of the user, and improves user experience.

## Claims

1. A method for processing associated content, comprising:
when multimedia is played, buffering some or all of data in the multimedia;
receiving a request, wherein the request is configured to request to acquire content associated with the buffered data;
acquiring a keyword according to the buffered data; and
obtaining the associated content by performing retrieval according to the keyword.

2. The method according to claim 1, wherein the buffering the some or all of the data in the multimedia comprises:
configuring at least two buffer areas on an apparatus that buffers the some or all of the data, wherein each buffer area of the at least two buffer areas is configured to buffer predetermined duration of data; and
storing the some or all of the data on the at least two buffer areas.

3. The method according to claim 2, wherein the storing the some or all of the data on the at least two buffer areas comprises:
after the first buffer area of the at least two buffer areas is filled with data, buffering data in the second buffer area, and continuing buffering data until the nth buffer area is filled with data, and after data is filled in the nth buffer area, deleting data in the first buffer area, and re-buffering data in the first buffer area, wherein n is the number of buffer areas.

4. The method according to any one of claims 1 to 3, wherein the buffering the some or all of the data in the multimedia comprises:
buffering the some or all of the data on a device playing the multimedia; and/or,
buffering the some or all of the data at a server side.

5. The method according to claim 1, wherein the acquiring the keyword according to the buffered data comprises:
parsing the keyword from the buffered data; or,
parsing one or more keywords from the buffered data, sending the one or more keywords to a sender of the request, and using one or more keywords confirmed by the sender as the keyword.

6. The method according to claim 1 or 5, wherein acquiring the keyword from the buffered data comprises:
in the case where the buffered data comprise audio data, recognizing some or all of content in the audio data as the keyword; and/or,
in the case where the buffered data comprise video data, acquiring the keyword corresponding to an image of the video data.

7. The method according to any one of claims 1 to 6, wherein a device playing the multimedia and a device sending the request are different devices, and the device playing the multimedia is connected with the device sending the request.

8. A system for processing an associated content, comprising:
a buffer component, configured to buffer, when multimedia is played, some or all of data in the multimedia;
a receiving component, configured to receive a request, wherein the request is configured to request to acquire content associated with the buffered data;
an acquisition component, configured to acquire a keyword according to the buffered data; and
a retrieval component, configured to obtain the associated content by performing retrieval according to the keyword.

9. The system according to claim 8, wherein the buffer component is configured to store the some or all of the data on at least two buffer areas, wherein the at least two buffer areas are configured on an apparatus that buffers the some or all of the data, and each buffer area of the at least two buffer areas is configured to buffer predetermined duration of data.

10. The system according to claim 9, wherein the buffer component is configured to buffer, after the first buffer area of the at least two buffer areas is filled with data, data in the second buffer area, and continue buffering data until the nth buffer area is filled with data, and after data is filled in the nth buffer area, delete data in the first buffer area, and re-buffer data in the first buffer area, wherein n is the number of buffer areas.

11. The system according to any one of claims 8 to 10, wherein the buffer component is located in a device playing the multimedia; and/or, is located in a server providing the multimedia.

12. The system according to claim 8, wherein the acquisition component is configured to parse the keyword from the buffered data; or, the acquisition component is configured to parse one or more keywords from the buffered data, send the one or more keywords to a sender of the request, and use one or more keywords confirmed by the sender as the keyword.

13. The system according to claim 8 or 12, wherein the acquisition component is configured to recognize, in the case where the buffered data comprise audio data, some or all of content in the audio data as the keyword; and/or, the acquisition component is configured to acquire, in the case where the buffered data comprise video data, the keyword corresponding to an image of the video data.

14. The system according to any one of claims 8 to 13, wherein a device playing the multimedia and a device sending the request are different devices, and the device playing the multimedia is connected with the device sending the request.
